**Europäisches Patentamt**

**European Patent Office**

**Office européen des brevets**

(19)

(11) Veröffentlichungsnummer: **0 169 973**
**B1**

(12) ## EUROPÄISCHE PATENTSCHRIFT

(45) Veröffentlichungstag der Patentschrift:
**28.12.88**

(51) Int. Cl.⁴: **B 23 B 41/02**

(21) Anmeldenummer: **85104203.6**

(22) Anmeldetag: **06.04.85**

(54) **Tiefbohrmaschine.**

(30) Priorität: **24.07.84 DE 3427212**

(43) Veröffentlichungstag der Anmeldung:
**05.02.86 Patentblatt 86/6**

(45) Bekanntmachung des Hinweises auf die Patenterteilung:
**28.12.88 Patentblatt 88/52**

(84) Benannte Vertragsstaaten:
**AT BE CH DE FR GB IT LI LU NL SE**

(56) Entgegenhaltungen:
**DE-A- 2 208 508**
**DE-A- 2 935 766**
**DE-A- 3 012 517**
**DE-A- 3 015 475**
**DE-B- 1 477 144**
**DE-B- 2 915 381**

(73) Patentinhaber: **TBT Tiefbohrtechnik GmbH und Co. KG.,
Siemensstrasse 1, D-7433 Dettingen (DE)**

(72) Erfinder: **Weiblen, Richard, Birkenweg 42,
D-7420 Münsingen-Dottingen (DE)**

(74) Vertreter: **Dreiss, Hosenthien & Fuhlendorf,
Gerokstrasse 6, D-7000 Stuttgart 1 (DE)**

ACTORUM AG

## Beschreibung

Die Erfindung betrifft eine Tiefbohrmaschine mit einer auf einem Maschinenbett horizontal verschiebbaren und von einem Spindelantrieb angetriebenen Spindeleinheit mit horizontaler Spindelachse zur Aufnahme eines Bohrwerkzeugs, dessen Bohrkopf beim Anbohren des Werkstücks in einer Bohrbuchse geführt wird, die in einem Bohrbuchsenhalter angeordnet ist, sowie mit einem sich an das die Spindeleinheit tragende Maschinenbett anschliessenden und von diesem unabhängig verstellbaren Werkstückaufspanntisch.

Eine derartige Tiefbohrmaschine ist aus der DE-A 2 208 508 bekannt. Der Aufspanntisch befindet sich dabei in derselben Ebene, in der auch der Bohrbuchsenhalter verschiebbar ist.

Dadurch bedingt, ergeben sich erhebliche Einschränkungen hinsichtlich der Aufspannbarkeit der Werkstücke. Insbesondere muss man bei sehr kleinen Werkstücken sehr nahe an die Kante des Aufspanntisches herangehen, um mit dem Bohrbuchsenhalter überhaupt an das aufgespannte Werkstück heranzukommen. Bei speziellen Bearbeitungsverfahren – z.B. dem Ziehaufbohrverfahren – muss dabei auch mit einem Gegenhalter gearbeitet werden. Dieser muss an der anderen Seite des Werkstückes anliegen. Das ist dann meist nur mit einer lang auskragenden Laterne möglich.

Verbunden mit einer derart schwierigen Werkstück-Aufspannung sind weitere Nachteile, so die Übertragung von Vibrationen des Spindelantriebs auf den Aufspanntisch, Führungsschlitten und Gegenhalterschlitten, mangelnde Starrheit der Aufspannung, falls diese ausserhalb der Mitte des Aufspanntisches erfolgen muss.

Der Erfindung liegt demgemäss die Aufgabe zugrunde, eine Tiefbohrmaschine der eingangs genannten Art derart weiterzubilden, dass auch Werkstücke zu bearbeiten sind, die seither auf bekannten Tiefbohrmaschinen nicht aufgespannt werden können. Insbesondere soll die Tiefbohrmaschine auch für die Bearbeitung von kleinen Werkstücken geeignet sein. Auch solche Werkstücke sollen bearbeitbar sein, bei denen der Abstand von der für die Aufspannung geeigneten Fläche zur Spindelachse grösser als die Spindelhöhe der Tiefbohrmaschine über der am Maschinenbett angeordneten Aufspannfläche ist.

Erfindungsgemäss wird diese Aufgabe mit den im Kennzeichen des Patentanspruchs 1 angegebenen Merkmalen gelöst.

Eine vorteilhafte Weiterbildung der Erfindung sieht vor, dass an der Führung ferner ein Gegenhalter verschiebbar angeordnet ist und die Verschiebung von Bohrbuchsenhalter und Gegenhalter durch entsprechende Stellantriebe unabhängig voneinander erfolgen kann.

Vorzugsweise kann man den Bohrbuchsenträger einerseits und gegebenenfalls den Gegenhalter andererseits an einer Art Portal in Richtung der Spindelachse, die auch die Vorschubrichtung ist, verschiebbar machen, wobei das Portal gegenüber der Spindelachse seitlich versetzt ist. Beide Einheiten sind unabhängig voneinander verschiebbar und können so ohne die genannten Einschränkungen auf ein Werkstück bis zur dichten Anlage hin zugestellt und angedrückt werden. Dabei kann das Werkstück in optimaler Position auf einem separat vom Maschinenbett anzuordnenden Werkstückaufspanntisch, der in allen drei Koordinaten verstellbar ist, aufgespannt werden.

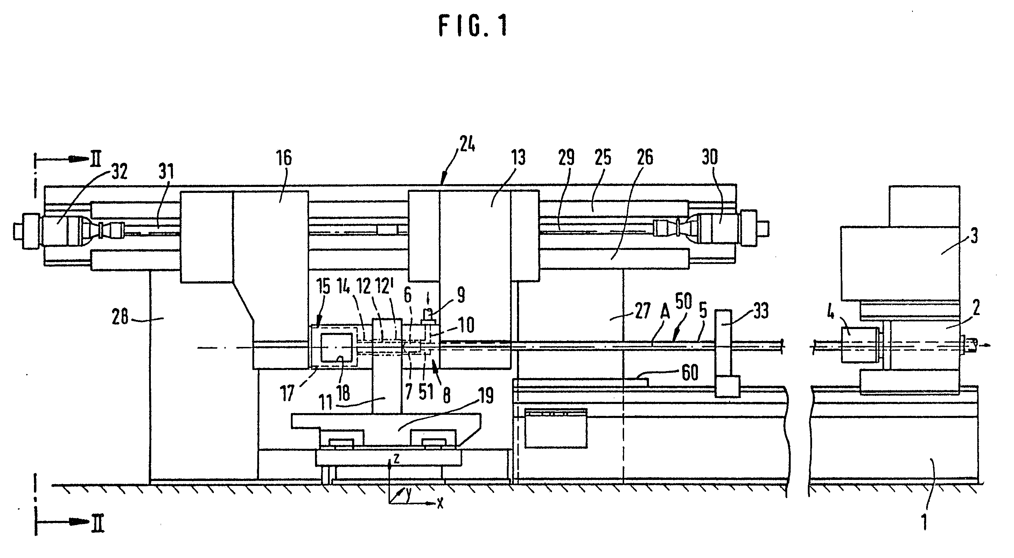

Damit ergeben sich erhebliche Vorteile. Hervorzuheben sind die maximalen Verfahrwege des verschiebbaren Bohrbuchsenhalters bzw. Gegenhalters. Dabei ist in jedem Fall die gesamte Fläche des Werkstückaufspanntisches nutzbar; unterschiedliche Anbohrsituationen sind in einer Werkstückaufspannung ohne Bohrbuchsenverlängerungen. Dabei kann starre Aufspannung beim Anbohren erfolgen. Dies gilt insbesondere für das bereits erwähnte Ziehaufbohrverfahren (zur Erläuterung vgl. Fig. 1). Die Anordnung eignet sich ferner für automatische Be- und Entladung der Werkstücke bei Auseinanderfahren von Bohrbuchsenhalter und gegebenenfalls Gegenhalter entlang der am «Portal» angeordneten Schiene.

Durch die Abkopplung des Werkstückaufspanntisches und der Führung des F-Schlittens und G-Schlittens des Bohrbuchsenhalters und gegebenenfalls des Gegenhalters vom Maschinenbett ergeben sich keine Bearbeitungseinflüsse und dadurch eine erhöhte Genauigkeit. Insgesamt ergibt sich bei der Anordnung eine kürzere Gesamtlänge durch vom Maschinenbett getrennte Führung von Bohrbuchsenhalter u. gegebenenfalls Gegenhalter. Ferner ist ein Aufbau eines Spindelkastens für rotierende Werkstücke an dem verschiebbaren Gegenhalter möglich.

Ein Ausführungsbeispiel der Erfindung und ihrer vorteilhaften Weiterbildungen werden im folgenden anhand der beigefügten Zeichnungen beschrieben. Es stellen dar:

Fig. 1 ein Ausführungsbeispiel,
Fig. 2 eine Ansicht in Richtung der Pfeile II–II in Fig. 1.

Fig. 1 zeigt eine Tiefbohrmaschine, die durch das Maschinenbett 1, die Spindeleinheit 2 und den Spindelantrieb 3 gebildet wird. Die Spindelachse ist mit A bezeichnet. In der Spindeleinheit 2 ist mittels Spanneinrichtungen 4 das Bohrwerkzeug 50, bestehend aus Bohrrohr 5 und Bohrkopf 6, aufgenommen. Der Bohrkopf 6 ist in einer Bohrbuchse 7 geführt.

Diese befindet sich im Bohrölzufuhrapparat 8 (im folgenden: Boza), dem Bohröl über den Anschluss 9 in die schematisch gestrichelt dargestellte Druckkammer 10 zugeführt wird.

Es handelt sich also um Tiefbohren nach dem sog. BTA-Verfahren (Boring and Trepanning Association), bei dem die Zufuhr von Bohröl zur Bohrstelle durch den Ringraum 51 zwischen Aussenseite des Bohrrohrs 5 und Innenseite der Bohrung (bzw. beim Anbohren: der Bohrbuchse 7) erfolgt; der Abtransport des Bohröls von der Bohrstelle erfolgt durch den Innenkanal des Bohrrohrs 5. Das Bohröl dient zur Kühlung und Schmierung der Bohrstelle sowie zum Abtransport der Späne. Dabei wird bei Vorschub von rechts nach links in Fig. 1 im Werkstück 11 die Bohrung 12 gebohrt. Der Boza 8 ist an einem Bohrbuchsenhalter 13 befestigt.

Bei dem Ausführungsbeispiel handelt es sich um das Bohren einer Bohrung nach dem Ziehaufbohrverfahren. Das heisst: nachdem zunächst – ausgehend von der in Fig. 1 gezeigten Stellung des Bohrwerkzeugs – von rechts nach links die Bohrung 12 im Werkstück 11 gebohrt worden ist, wird der Bohrkopf 6 in der Führungsbuchse 14 aufgenommen. Diese Führungsbuchse 14 ist in einer sog. Laterne 15 angeordnet, die am Gegenhalter 16 angeordnet ist. Die Laterne 15 hat innen, von links nach rechts im Anschluss an die Führungsbuchse 14, einen Hohlraum 17, der von aussen durch Öffnungen 18 zugänglich ist. Wird, nach dem Bohren der Bohrung 12, der Bohrkopf 6 in Fig. 1 nach links über die Führungsbuchse 14 hinaus verschoben, so kann er innerhalb der Laterne 15 ausgewechselt werden. Er wird durch einen Bohrkopf mit einem etwas grösseren Bohrdurchmesser ersetzt, dessen Bohrschneiden auf der – in Fig. 1 – rechten Seite liegen, so dass bei einer Bewegung des Bohrkopfes von links nach rechts in Fig. 1 die Bohrung 12 auf dem – strichpunktiert eingezeichneten – Durchmesser 12' aufgebohrt wird. Da hierbei das Bohrwerkzeug gezogen wird, spricht man vom «Ziehaufbohrverfahren». Für dieses Ziehaufbohrverfahren ist das Anliegen des Boza 10 mit Bohrbuchse 7 auf der einen Seite des Werkstücks und der Führungsbuchse 14 in der Laterne 15 auf der anderen Seite des Werkstücks wesentlich. In anderen Worten: sowohl der Bohrbuchsenhalter 13 als der Gegenhalter 16 müssen mit den von ihnen getragenen Einrichtungen (Boza 10 bzw. Laterne 15) beidseitig an das Werkstück 11 herangefahren und angedrückt werden.

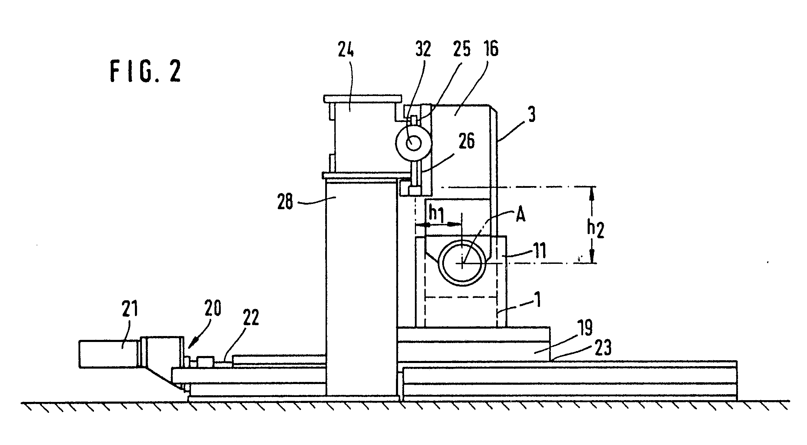

Das Werkstück 11 ist auf einem Werkstückaufspanntisch 19 aufgespannt. Dieser ist in Richtung aller drei Koordinaten x, y, z durch geeignete Mittel verfahrbar. Von den hierzu benötigten Einrichtungen sind in Fig. 2 die Mittel zur Verschiebung in y-Richtung gezeigt und mit 20 bezeichnet. Die Verschiebbarkeit ist durch Flachführungen gewährleistet, wie sie im Handel erhältlich sind, und erfolgt durch motorangetriebene Drehspindeln. So weisen die Mittel 20 zum Verfahren des Werkstückaufspanntisches 19 in y-Richtung den Antrieb 21, die Spindel 22 und die Führungsschienen 23 auf. Die weiteren Verstellmittel sind ebenfalls herkömmlicher Art und daher der Einfachheit halber nicht eingezeichnet.

Der Bohrbuchsenhalter 13 und der Gegenhalter 16 sind an Führungen 25 und 26 verschiebbar angeordnet. Die Verschiebung des Bohrbuchsenhalters 13 und des Gegenhalters 16 kann unabhängig voneinander erfolgen.

Die beiden Führungen 25 und 26 gehören zu einer Brücke 24, die von zwei Säulen 27 und 28 getragen wird. Wie aus Fig. 2 ersichtlich, ist die Lage der Führung 26 parallel zur Spindelachse A und dieser gegenüber seitlich um $h_1$ sowie höhenmässig um $h_2$ versetzt. Die beiden Säulen 27, 28 stehen also in Fig. 1 etwas hinter dem Maschinenbett 1 und derart zueinander versetzt, dass ihre gedachte Verbindungslinie parallel zur Spindelachse A verläuft. Die Verschiebbarkeit von Bohrbuchsenhalter 13 und Gegenhalter 16 entlang den Führungen 25, 26 der Brücke 1 ist also parallel zur Spindelachse und damit zur Vorschubrichtung. Die Verschiebung des Bohrbuchsenhalters 13 erfolgt mittels Spindel 29 und Stellantrieb 30; die Verschiebung des Gegenhalters erfolgt mittels Spindel 31 und Stellantrieb 32. Ferner ist ersichtlich, dass in Richtung der Spindelachse A der Werkstückaufspanntisch 19 hinter dem Maschinenbett 1 und unabhängig von diesem angeordnet ist.

Die vom Maschinenbett 1 unabhängige Anordnung eines in Richtung aller drei Koordinaten (x, y, z) verschiebbaren Werkstückaufspanntisches wirkt zusammen mit der vom Maschinenbett unabhängige, separate Verschiebbarkeit von Bohrbuchsenhalter 13 und Gegenhalter 16. Durch die obenliegende Führung des Bohrbuchsenhalters 13 und des Gegenhalters 16 an den oberhalb der Spindelachse angeordneten Führungen 25, 26 ergeben sich maximale Wege zur Verstellung und damit optimale Möglichkeiten der Anordnung des Werkstücks. Damit kann für die Werkstückaufnahme die gesamte Fläche des Werkstückaufspanntisches 19 ausgenützt werden, auch wenn es sich um Werkstücke mit schwieriger Form handelt, deren Abstand von der Aufspannfläche 60 des Maschinenbettes grösser als die Höhe der Spindelachse A der Aufspannfläche 60 gegenüber. Man kann also Werkstücke bearbeiten, die normalerweise auf einer derartigen Tiefbohrmaschine nicht bearbeitet werden könnten. Insbesondere lassen sich mittels einer derartigen Maschine unterschiedliche Anbohrsituationen bewerkstelligen. Man kann bei dieser Werkstückaufspannung gegebenenfalls auf Bohrbuchsenverlängerungen verzichten, wie sie ansonsten erforderlich wären. Dadurch kann man auch bei komplizierten Vorgehensweisen, wie dem dargestellten Ziehaufbohren, sehr starre Anordnungen von Werkstück und Bohrwerkzeug gewährleisten. Im Gegensatz zu den seither bekannten Möglichkeiten des Aufspannens der Werkstücke ist auch durch die Verschiebbarkeit des Werkstückaufspanntisches 19 in Richtung aller dreier Koordinaten eine freie Werkstückpositionierung möglich.

Die erfidungsgemässe Anordnung eignet sich auch in besonderer Weise für eine Automatisierung, da Bohrbuchsenhalter 13 und Gegenhalter 16 in x-Richtung voneinander wegfahren und damit das Werkstück für den Zugriff von Handhabungsautomaten freigeben können.

Durch die Trennung des Werkstückaufspanntisches 19 von dem Maschinenbett bzw. den die Spindeleinheit 2 tragenden Bauteilen wird sichergestellt, dass von der Antriebseinheit her keine Vibrationseinflüsse oder dgl. auf die Werkstückaufspannung ausgeübt werden. Dadurch ergibt sich eine erhöhte Genauigkeit.

Durch die separate Führung des Bohrbuchsenhalters ergibt sich auch eine kürzere Gesamtlänge der Maschine im Vergleich gegenüber Maschinen in Standardbauweise mit gleicher Bohrtiefe. Schliesslich ist ergänzend zu erwähnen, dass man am Gegenhalter auch noch einen Spindelkasten für rotierende Werkstückaufnahmen anbringen kann.

**Patentansprüche**

1. Tiefbohrmaschine mit einer auf einem Maschinenbett (1) horizontal verschiebbaren und von einem Spindelantrieb (3) angetriebenen Spindeleinheit (2) mit horizontaler Spindelachse (A) zur Aufnahme eines Bohrwerkzeugs (50), dessen Bohrkopf (6) beim Anbohren des Werkstücks (12) in einer Bohrbuchse (7) geführt wird, die in einem Bohrbuchsenhalter (13) angeordnet ist, der in Richtung der Spindelachse (A) verschiebbar ist, sowie mit einem sich an das die Spindeleinheit tragende Maschinenbett anschliessenden und von diesem unabhängig verstellbaren Werkstückaufspanntisch (19), dadurch gekennzeichnet, dass der Bohrbuchsenhalter (13) an einer vom Maschinenbett (1) getrennten Führung (25, 26) verschiebbar ist, die oberhalb ($h_2$) der Spindelachse (A) und ihr gegenüber horizontal versetzt ($h_1$) angeordnet ist und sich zumindest teilweise über das Maschinenbett (1) hinaus in Richtung der Spindelachse (A) erstreckt.

2. Tiefbohrmaschine nach Anspruch 1, dadurch gekennzeichnet, dass an der Führung (25, 26) ferner ein Gegenhalter (16) verschiebbar ist und die Verschiebung von Bohrbuchsenhalter (13) und Gegenhalter (16) durch voneinander unabhängige Stellantriebe (30, 32) erfolgt.

3. Tiefbohrmaschine nach Anspruch 1 oder 2, dadurch gekennzeichnet, dass an dem Bohrbuchsenhalter (13) in an sich bekannter Weise – zum Einsatz im BTA-Verfahren bestimmt – ein Bohrölzuführapparat (10) angeordnet ist, in dem die Bohrbuchse (7) aufgenommen ist.

4. Tiefbohrmaschine nach Anspruch 2 oder 3, dadurch gekennzeichnet, dass an dem Gegenhalter (16) eine Laterne (15) angeordnet ist, in der eine Führungsbuchse (14) aufgenommen ist.

5. Tiefbohrmaschine nach Anspruch 1 oder einem der folgenden, dadurch gekennzeichnet, dass die Führung (25, 26) Teil einer Brücke (24) ist, die auf zwei Säulen (27, 28) angeordnet ist, die gegenüber der Spindelachse (A) versetzt angeordnet sind und zwischen denen der Werkstückaufspanntisch (19) angeordnet ist.

**Claims**

1. A deep boring machine comprising a spindle unit (2) which is displaceable horizontally on a machine bed (1) and which is driven by a spindle drive (3), with a horizontal spindle axis (A), for carrying a boring tool (50), the boring head (6) of which is guided when boring into the workpiece (12) in a boring sleeve (7) which is arranged in a boring sleeve holder (13) which is displaceable in the direction of the spindle axis (A), and a workpiece clamping table (19) which adjoins the machine bed carrying the spindle unit and which is adjustable independently thereof characterised in that the boring sleeve holder (13) is displaceable on a guide (25, 26) which is separate from the machine bed (1) and which is arranged above ($h_2$) the spindle axis (A) and displaced horizontally ($h_1$) relative thereto and which extends at least partially beyond the machine bed (1) in the direction of the spindle axis (A).

2. A deep boring machine according to claim 1 characterised in that a counter-holder (16) is also displaceable on the guide (25, 26) and displacement of the boring sleeve holder (13) and the counter-holder (16) is produced by mutually independent adjusting drives (30, 32).

3. A deep boring machine according to claim 1 or claim 2 characterised in that a boring oil feed device (10) in which the boring sleeve (7) is accommodated is arranged on the boring sleeve holder (13) in per se known manner, intended for use in the BTA-process.

4. A deep boring machie according to claim 2 or claim 3 characterised in that arranged on the counter-holder (16) is a cage (15) in which a guide sleeve (14) is accommodated.

5. A deep boring machine according to claim 1 or one of the following claims characterised in that the guide (25, 26) is part of a bridge (24) which is arranged on two columns (27, 28) which are arranged in displaced relationship to the spindle axis (A) and between which the workpiece clamping table (19) is arranged.

**Revendications**

1. Matériel de perçage en grande profondeur avec un ensemble d'arbre porte-foret (2) déplaçable horizontalement sur un bâti de machine (1) et entraîné par une commande (3) de l'arbre, avec un axe (A) horizontal d'arbre porte-foret destiné à recevoir un outil de perçage (50), dont la tête de perçage (6) est guidée, pendant le perçage du produit (12), dans une fouille guide-foret (7) qui est disposée dans un support de douille (13), lequel support est mobile dans le sens de l'axe (A), ainsi qu'avec une table de fixation (19) du produit, raccordée au bâti de machine portant l'ensemble d'arbre porte-foret, et ajustable indépendamment de ce bâti, caractérisé en ce que le support de douille (13) est mobile sur une glissière (25, 26) séparée du bâti de machine (1), la glissière étant disposée au-dessus ($h_2$) de l'axe (A) de l'arbre, et décalée horizontalement ($h_1$) par rapport à cet axe et s'étendant au moins en partie au-delà du bâti de machine (1) dans le sens de l'axe (A) de l'arbre.

2. Matériel de perçage en grande profondeur selon la revendication 1, caractérisé en ce que sur la glissière (25, 26) est montée en coulissement également une contre-butée (16) et que les coulissements du support de douille (13) et de la contre-butée (16) s'effectuent au moyen de mécanismes de réglage (30, 32) indépendants l'un de l'autre.

3. Matériel de perçage en grande profondeur selon la revendication 1 ou 2, caractérisé en ce que sur le support de douille (13) est disposé, d'une manière connue en soi, un appareil d'amenée d'huile de perçage (10) – défini pour la mise en œuvre dans un procédé BTA –, dans lequel est montée la douille guide-foret (7).

4. Matériel de perçage en grande profondeur selon la revendication 2 ou 3, caractérisé en ce que sur la contre-butée (16) est disposée une lanterne (15) dans laquelle est montée une douille de guidage (14).

5. Matériel de perçage en grande profondeur selon la revendication 1 ou l'une des suivantes, caractérisé en ce que la glissière (25, 26) fait partie d'un pont (24) qui est monté sur deux colonnes (27, 28) qui sont décalées par rapport à l'axe (A) de l'arbre et entre lesquelles est placée la table de fixation (19) du produit.

# FIG. 1

EP 0 169 973 B1

F I G. 2

EP 0 169 973 B1